# EUROPEAN PATENT APPLICATION

(11) **EP 4 280 107 A1**
(43) Date of publication of application: **22.11.2023**
(21) Application number: 21927108.7
(22) Date of filing: 23.02.2021
(51) Int. Cl.: G06N 3/00

(54) **DATA PROCESSING METHOD AND APPARATUS, DEVICE, AND MEDIUM**

(71) Applicant: Huawei Technologies Co., Ltd., Shenzhen, Guangdong 518129 (CN)
(72) Inventor: FAN, Li, Shenzhen, Guangdong 518129 (CN); HAN, Shufa, Shenzhen, Guangdong 518129 (CN); PI, Huali, Shenzhen, Guangdong 518129 (CN); WANG, Jiexin, Shenzhen, Guangdong 518129 (CN)
(74) Representative: Thun, Clemens
(86) International application number: PCT/CN2021/077413
(87) International publication number: WO 2022/178660

(57) **Abstract**

Embodiments of this application disclose a data processing method, including: splitting a first tensor into at least two first sub-tensors, where the first tensor is a to-be-processed multi-dimensional tensor; determining a target computation order of the at least two first sub-tensors, where the target computation order is a processing order of the at least two first sub-tensors; and processing the at least two first sub-tensors based on the target computation order. Embodiments of this application further provide an apparatus, a device, and a medium. The first tensor is split into the at least two first sub-tensors, so that a data volume of a first sub-tensor that needs to be processed each time is reduced, and intermediate data is also reduced accordingly. This avoids a cache & buffer overflow, so that in a subsequent working process, a data reuse rate of a high-speed cache & buffer can be increased, a computation data throughput can be increased, and a frequency of data exchange between the cache & buffer and external storage can be reduced.

## Description

### TECHNICAL FIELD

This application relates to the field of artificial intelligence, and in particular, to a data processing method, an apparatus, a device, and a medium.

### BACKGROUND

A neural network compiler considers a neural network (neural network, NN) model as a computation graph. First, graph compilation is performed, graph topology is analyzed, and computing nodes are converted into tasks on different computing engines, to determine a computation order and form an actual computation stream (stream). Then, operator compilation is performed to generate computation task code that can be run on an accelerator SoC. In an entire compilation process, many optimization and processing passes (passes) in graph optimization and operator optimization are involved. Most important optimization is how to efficiently use a system-on-chip high-speed cache & buffer (Cache & Buffer) to reduce data access overheads, and reduce a bandwidth limit of external storage access, thereby improving efficiency of data loading and data pipeline computation.

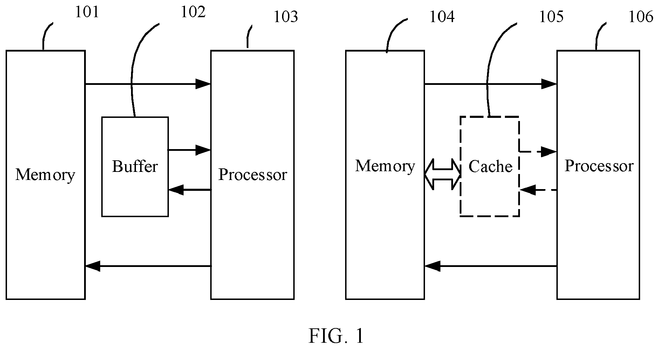

As shown in FIG. 1, FIG. 1 is a diagram of an architecture in which a high-speed cache & buffer run on an SoC. In the buffer, a memory DDR 101 sends data to a processor Engine 103 for computation, and the Engine 103 buffers intermediate data in a Buffer 102 in a computation process, thereby implementing buffering of the intermediate data. In the cache, a Cache 105 is a part of an Engine 106. The Engine 106 exchanges with a DDR104, and the Engine 106 determines caching of intermediate data in the Cache 105.

In conventional technologies, a large data volume is computed by an operator in a neural network, and a data throughput of a task usually reaches dozens of MB or even more than one GB. However, capacities of the SoC cache & buffer are limited. Therefore, cache & buffer failure caused by a cache miss or a buffer overflow often occurs.

Therefore, the foregoing problems in the conventional technologies still need to be resolved.

### SUMMARY

Embodiments of this application provide a data processing method, an apparatus, a device, and a medium, to reduce an intermediate data volume in processing a neural network model, reduce a frequency of data exchange between cache & buffer and external storage, thereby avoiding a cache & buffer overflow.

To resolve the foregoing technical problems, embodiments of this application provide the following technical solutions.

According to a first aspect, an embodiment of this application provides a data processing method, including: splitting a first tensor into at least two first sub-tensors, where the first tensor is a to-be-processed multi-dimensional tensor; determining a target computation order of the at least two first sub-tensors, where the target computation order is a processing order of the at least two first sub-tensors; and processing the at least two first sub-tensors based on the target computation order.

In this embodiment, the first tensor is split into the at least two first sub-tensors, so that a data volume of a first sub-tensor that needs to be processed each time is reduced, and intermediate data is also reduced accordingly. This avoids a cache & buffer overflow, so that in a subsequent working process, a data reuse rate of a high-speed cache & buffer can be increased, a computation data throughput can be increased, and a frequency of data exchange between the cache & buffer and external storage can be reduced.

Optionally, the splitting a first tensor into at least two first sub-tensors includes: inputting the first tensor into a left-hand matrix; splitting the first tensor into N parts along an axis of the left-hand matrix, where N is a positive integer greater than or equal to 2; inputting the first tensor into a right-hand matrix; splitting the first tensor into M parts along an axis of the right-hand matrix, where M is a positive integer greater than or equal to 2; and performing tensor concatenation aggregation on the N parts of the split first tensor and the M parts of the split first tensor to obtain a split first tensor, where the split first tensor includes the at least two first sub-tensors.

In this embodiment, the split first tensor includes the at least two first sub-tensors. Tensor concatenation aggregation needs to be performed on data slices obtained through splitting along the left-hand matrix and data slices obtained through splitting along the right-hand matrix on two different axes when tensors are output, to obtain a plurality of split first sub-tensors. The plurality of first sub-tensors are concatenated to form the first tensor. In this way, operator splitting is implemented in the foregoing manner.

Optionally, the splitting a first tensor into at least two first sub-tensors includes: splitting the first tensor along an axis of the first tensor; and performing tensor reduction aggregation on the split first tensor to obtain a split first tensor, where the split first tensor includes the at least two first sub-tensors.

In this embodiment, the split first tensor includes the at least two first sub-tensors. Two first tensors that are split along a same axis are aggregated, so that operator splitting is implemented, and an obtained split tensor includes at least two first sub-tensors.

Optionally, before the splitting a first tensor into at least two first sub-tensors, the method further includes: obtaining all splitting manners of the first tensor; obtaining all split aggregation streams of the first tensor in a depth direction of a computation graph based on a mapping relationship, where the mapping relationship is a relationship between slices of the split first tensor, and each different splitting manner corresponds to one split aggregation stream; and determining a splitting manner corresponding to a split aggregation stream with a longest transmission distance of the mapping relationship as a target splitting manner; and the splitting a first tensor into at least two first sub-tensors includes: splitting the first tensor into the at least two first sub-tensors in the target splitting manner.

In this embodiment, the split aggregation stream corresponding to each splitting manner has a different transmission distance in the depth direction of the computation graph, and the splitting manner corresponding to the aggregation stream with the longest transmission distance is determined as the target splitting manner. A splitting method corresponding to the splitting manner can enable an operator of the first tensor to be transmitted farther in the depth direction after splitting, to minimize a processing volume of intermediate data and maximize cache & buffer benefit.

Optionally, before the splitting a first tensor into at least two first sub-tensors, the method further includes: obtaining training tensors, where the training tensors and the first tensor are different tensors; determining a plurality of different computation policies based on the training tensors, where the computation policy includes a splitting quantity of the training tensor and a computation order; and generating a target policy model through training based on the different computation policies, where the target policy model includes feedback time of a same training tensor corresponding to a case in which the different computation policies are executed.

In this embodiment, the target policy model is obtained based on the training tensors in a reinforcement learning manner, and the target policy model includes the feedback time of the same training tensor when the different computation policies are executed. In this way, the feedback time of the same training tensor when the different computation policies are executed can be obtained based on the target policy model, so that an optimal computation policy can be determined based on the target policy model when a new tensor is obtained.

Optionally, after the generating a target policy model through training based on the different computation policies, the method further includes: using, in each of a plurality of rounds of iterations, a target training tensor as fixed input that is input into the target policy model, where the target training tensor and the first tensor are different tensors; and optimizing the target policy model based on results output by the target policy model in the plurality of rounds of iterations.

In this embodiment, through a reinforcement learning method, a policy model can be quickly obtained based on a training set, so that a long process of an evolutionary algorithm is not required, thereby improving computation efficiency.

Optionally, the generating a target policy model through training based on the different computation policies includes: encoding the different computation policies as gene sequences; performing iterative verification on a gene sequence of each individual by using each computation policy as an individual; and obtaining a converged optimal solution in iteration results as a computation policy in the target policy model.

n this embodiment, each computation policy is used as an individual, and is sampled as on-board data. A new individual (a computation policy) generated in each iteration is for on-board verification or is input into a simulator for verification, and a direction of population evolution is adjusted based on a feedback result to eventually converge an optimal solution through continuous iterations.

Optionally, the encoding the different computation policies as gene sequences includes: encoding the computation policy in the optimized target policy model as the gene sequence.

In this embodiment, a policy model obtained through a reinforcement learning algorithm is used as an initial gene sequence of an evolutionary algorithm, so that an initial point of the evolutionary algorithm has already been an ideal policy model. This improves a performance lower limit of the evolutionary algorithm. In other words, performance of a first policy model generated by the evolutionary algorithm in a subsequent working process is not lower than performance of the initial policy model. An initial sample of the iteration method is a policy model computed by the reinforcement algorithm. Therefore, initial point selection should be better, so that the evolutionary algorithm can obtain an optimal solution in a quicker and better manner, and the computation efficiency is greatly improved.

Optionally, after the generating a target policy model through training based on the different computation policies, the method further includes: inputting the target policy model into a simulator; and obtaining a feedback result output after the simulator performs data simulation on the target policy model, where the feedback result indicates performance of the target policy model; or inputting the target policy model into a performance predictor; and obtaining a prediction result output by the performance predictor, where the prediction result is for predicting performance of the target policy model.

In this embodiment, the simulator or the performance predictor may predict feedback time based on a preset method, replace actual on-board verification through prediction of the performance predictor, and feed back performance data through a prediction method, to improve the computation efficiency.

Optionally, the method further includes: adding the target policy model to a policy knowledge library; and the determining a target computation order of the at least two first sub-tensors includes: obtaining the target policy model from the policy knowledge library; and obtaining a target computation policy based on the target policy model, where the target computation policy includes a splitting quantity of the first tensor and the target computation order.

In this embodiment, a policy search algorithm inputs the obtained model into the policy knowledge library, so that in a subsequent working process, whenever a new tensor is input, a corresponding computation policy can be directly queried from the policy knowledge library, to determine a splitting quantity of a current vector. This does not require re-execution of the evolutionary algorithm, and shortens time for determining a splitting quantity of each tensor data, thereby improving the computation efficiency.

According to a second aspect, an embodiment of this application provides a data processing apparatus, including:
a splitting unit, configured to split a first tensor into at least two first sub-tensors, where the first tensor is a to-be-processed multi-dimensional tensor;
an execution unit, configured to determine a target computation order of the at least two first sub-tensors split by the splitting unit, where the target computation order is a processing order of the at least two first sub-tensors; and
a processing unit, configured to process the at least two first sub-tensors based on the target computation order determined by the execution unit.

Optionally, the splitting unit is further configured to:
input the first tensor into a left-hand matrix;
split the first tensor into N parts along an axis of the left-hand matrix, where N is a positive integer greater than or equal to 2;
input the first tensor into a right-hand matrix;
split the first tensor into M parts along an axis of the right-hand matrix, where M is a positive integer greater than or equal to 2; and
perform tensor concatenation aggregation on the N parts of the split first tensor and the M parts of the split first tensor to obtain a split first tensor, where the split first tensor includes the at least two first sub-tensors.

Optionally, the splitting unit is further configured to:
split the first tensor along an axis of the first tensor; and
perform tensor reduction aggregation on the split first tensor to obtain a split first tensor, where the split first tensor includes the at least two first sub-tensors.

Optionally, the apparatus further includes a determining unit, configured to:
obtain all splitting manners of the first tensor;
obtain all split aggregation streams of the first tensor in a depth direction of a computation graph based on a mapping relationship, where the mapping relationship is a relationship between slices of the split first tensor, and each different splitting manner corresponds to one split aggregation stream; and
determine a splitting manner corresponding to a split aggregation stream with a longest transmission distance of the mapping relationship as a target splitting manner.

The splitting unit is further configured to:
split the first tensor into the at least two first sub-tensors in the target splitting manner.

Optionally, the apparatus further includes a training unit, configured to:
obtain training tensors, where the training tensors and the first tensor are different tensors;
determine a plurality of different computation policies based on the training tensors, where the computation policy includes a splitting quantity of the training tensor and a computation order; and
generate a target policy model through training based on the different computation policies, where the target policy model includes feedback time of a same training tensor corresponding to a case in which the different computation policies are executed.

Optionally, the training unit is further configured to:
use, in each of a plurality of rounds of iterations, a target training tensor as fixed input that is input into the target policy model, where the target training tensor and the first tensor are different tensors; and
optimize the target policy model based on results output by the target policy model in the plurality of rounds of iterations.

Optionally, the training unit is further configured to:
encode the different computation policies as gene sequences;
perform iterative verification on a gene sequence of each individual by using each computation policy as an individual; and
obtain a converged optimal solution in iteration results as a computation policy in the target policy model.

Optionally, the training unit is further configured to:
encode the computation policy in the optimized target policy model as the gene sequence.

Optionally, the training unit is further configured to:
input the target policy model into a simulator; and
obtain a feedback result output after the simulator performs data simulation on the target policy model, where the feedback result indicates performance of the target policy model; or
input the target policy model into a performance predictor; and
obtain a prediction result output by the performance predictor, where the prediction result is for predicting performance of the target policy model.

Optionally, the training unit is further configured to:
obtain the target policy model from a policy knowledge library; and
obtain a target computation policy based on the target policy model, where the target computation policy includes a splitting quantity of the first tensor and the target computation order.

According to a third aspect, an embodiment of this application provides a computer device, including a processor and a memory. When running computer instructions stored in the memory, the processor performs the method according to the first aspect or any one of the possible implementations of the first aspect.

According to a fourth aspect, an embodiment of this application provides a computer-readable storage medium, including instructions. When the instructions are run on a computer, the computer is enabled to perform the method according to the first aspect or any one of the possible implementations of the first aspect.

### BRIEF DESCRIPTION OF DRAWINGS

FIG. 1 is a diagram of an architecture in which a high-speed cache & buffer run on an SoC;
FIG. 2 is a schematic diagram of using a graph fusion and splitting technology;
FIG. 3 is a schematic diagram of a data processing method according to an embodiment of this application;
FIG. 4 is a schematic diagram of an implementation of a first tensor according to an embodiment of this application;
FIG. 5 is a schematic diagram of a splitting manner of a first tensor according to an embodiment of this application;
FIG. 6 is a schematic diagram of another splitting manner of a first tensor according to an embodiment of this application;
FIG. 7 is a diagram of a mapping relationship obtained after operator splitting according to an embodiment of this application;
FIG. 8 is a schematic diagram of a split aggregation stream in a depth direction of the computation graph according to an embodiment of this application;
FIG. 9 is a diagram of an architecture of an evolutionary algorithm according to an embodiment of this application;
FIG. 10 is a diagram of an architecture of a reinforcement learning optimization algorithm according to an embodiment of this application;
FIG. 11A and FIG. 11B are a principle diagram of a reinforcement learning network according to an embodiment of this application;
FIG. 12 is a diagram of an architecture of an algorithm combining an evolutionary algorithm with a reinforcement learning according to an embodiment of this application;
FIG. 13a is a schematic diagram of different computation orders according to an embodiment of this application;
FIG. 13b is a diagram of a correspondence between breadth first and a pipeline sub-graph boundary according to an embodiment of this application;
FIG. 14 is a schematic diagram of a memory encoding form of a computation order according to an embodiment of this application;
FIG. 15 is a schematic entire flowchart of a data processing method according to an embodiment of this application;
FIG. 16 is a schematic diagram of a computer device according to an embodiment of this application; and
FIG. 17 is a schematic diagram of a data processing apparatus according to an embodiment of this application.

### DESCRIPTION OF EMBODIMENTS

A neural network compiler considers a neural network (neural network, NN) model as a computation graph. First, graph compilation is performed, graph topology is analyzed, and computing nodes are converted into tasks on different computing engines, to determine a computation order and form an actual computation stream (stream). Then, operator compilation is performed to generate computation task code that can be run on an accelerator SoC. In an entire compilation process, many optimization and processing passes (passes) in graph optimization and operator optimization are involved. Most important optimization is how to efficiently use system-on-chip high-speed cache & buffer (Cache & Buffer) to reduce data access overheads, and reduce a bandwidth limit of external storage access, thereby improving efficiency of data loading and data pipeline computation.

Generally, a large data volume is computed by an operator in a neural network, and a data throughput of a task usually reaches dozens of MB or even more than one GB. However, capacities of the SoC cache & buffer are limited. Therefore, cache & buffer failure caused by a cache miss or a buffer overflow often occurs.

In order to resolve the foregoing problems, the following two manners are currently adopted.

### Solution 1:

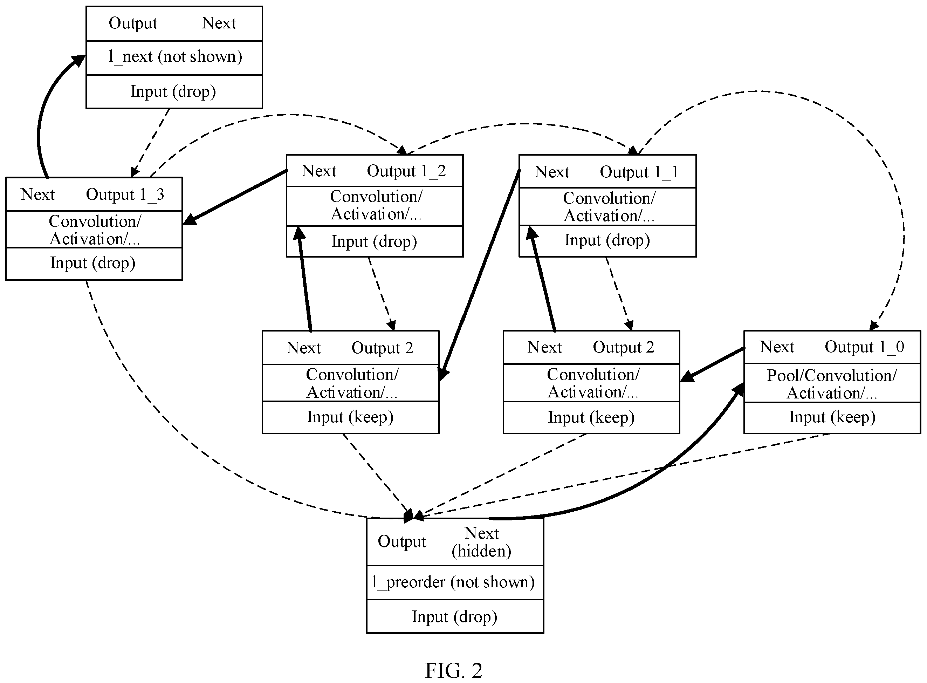

Refer to FIG. 2. FIG. 2 is a schematic diagram of using a common graph fusion and splitting technology. As shown in FIG. 2, each block in FIG. 2 represents a splitting sub-graph (group). For splitting sub-graphs (group) in a depth direction of a computation graph, an upper layer of each block represents an output layer, a lower layer represents an input layer, and a middle layer represents a sub-graph. Then, input layers and output layers that are kept (keep) in a buffer and input layers and output layers that are dropped (drop) are determined.

However, the technology only performs grouping in the depth direction of the computation graph, then determines whether the input layers and the output layers are kept in high-speed cache & buffer based on a data volume (tensor shape) computed by a node, and does not perform splitting on a tensor layer. Once the data volume is large and cannot be cached/buffered, the manner becomes invalid. In addition, the method also controls an execution order of branch structures to a certain extent. However, because there is no graph operation such as tensor splitting and node replication, the branch structures are simple, and a computation order is not entirely controlled.

### Solution 2:

Currently, a cache-aware kernel tiling (Cache-Aware Kernel Tiling) method is also used to perform data splitting. The method is a graph splitting optimization technology based on a GPU L2 cache. Tensor (tensor) data of an operator is split to reduce a cache miss.

However, the method only optimizes the L2 cache of a GPU platform, a splitting quantity in a fusion depth is necessarily the same, and fusion of different splitting quantities is not supported.

Therefore, to resolve the foregoing problems, an embodiment of this application provides a data processing method. A tensor is split, to improve a data reuse rate of a high-speed cache & buffer, increase a computation data throughput, and reduce a frequency of data exchange between the cache & buffer and external storage.

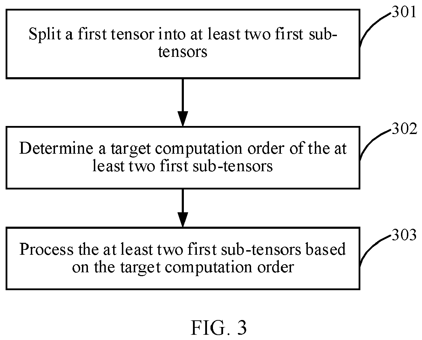

Refer to FIG. 3. As shown in FIG. 3, a data processing method provided in an embodiment of this application includes the following steps.

301: Split a first tensor into at least two first sub-tensors.

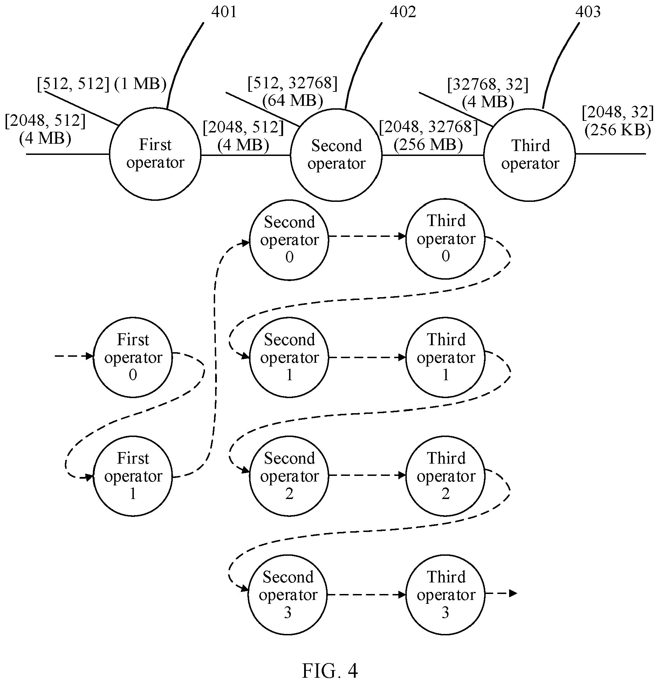

In this embodiment, the first tensor is a to-be-processed multi-dimensional tensor. Refer to FIG. 4. FIG. 4 is a schematic diagram of a possible implementation of a first tensor. As shown in FIG. 4, the first tensor may include three Matmul operators: a first operator 401, a second operator 402, and a third operator 403. Slices obtained by splitting each operator are the first sub-tensors. It can be seen from FIG. 4 that, the first operator 401 is split into two parts: Matmul0 and Matmul1. The second operator 402 is split into four parts: Matmul0 to Matmul3. The third operator 403 is split into four parts: Matmul0 to Matmul3.

The first tensor is split into the at least two first sub-tensors, so that a data volume of a first sub-tensor that needs to be processed by a processor Engine each time is reduced, and intermediate data is also reduced accordingly. This avoids a cache & buffer overflow, so that in a subsequent working process, a data reuse rate of a high-speed cache & buffer can be increased, a computation data throughput can be increased, and a frequency of data exchange between the cache & buffer and external storage can be reduced.

Optionally, the first tensor may be split in the following two manners: 1. Tensor concatenation concat splitting. 2. Tensor reduction reduce splitting. For convenience of understanding, the two splitting manners are described in detail below.

### 1. The tensor concatenation concat splitting.

In this embodiment, the splitting of the first tensor through the concat splitting may be specifically implemented in the following manner.

### (1) Input the first tensor into a left-hand matrix.

In this embodiment, optionally, the first tensor is a matrix-multiplication Matmul operator.

### (2) Split the first tensor into N parts along an axis of the left-hand matrix.

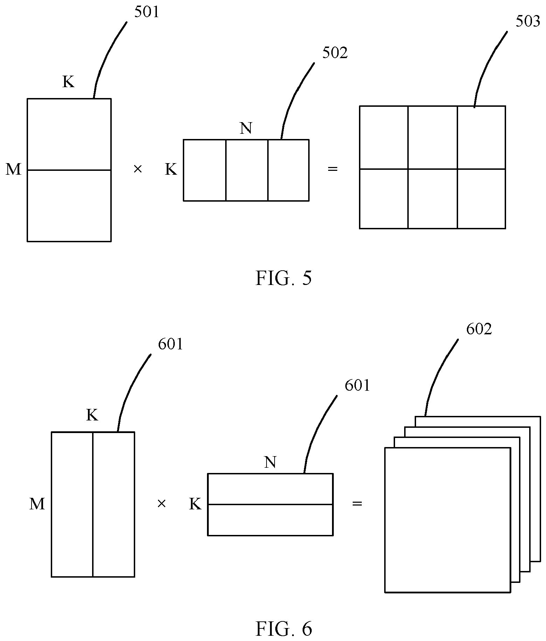

In this embodiment, N is a positive integer greater than or equal to 2, and the first tensor is split along the axis of the left-hand matrix, to implement the step of tensor splitting. For example, as shown in FIG. 5, a first tensor 501 may be split into two parts along an M axis of the left-hand matrix.

### (3) Input the first tensor into a right-hand matrix.

In this embodiment, the first tensor is input into the right-hand matrix, to obtain the first tensor in the right-hand matrix.

### (4) Split the first tensor into M parts along an axis of the right-hand matrix.

In this embodiment, M is a positive integer greater than or equal to 2, and the first tensor is split along the axis of the right-hand matrix, to implement the step of tensor splitting. For example, as shown in FIG. 5, a first tensor 502 may be split into three parts along an N axis of the right-hand matrix.

### (5) Perform tensor concatenation aggregation on the N parts of the split first tensor and the M parts of the split first tensor to obtain a split first tensor.

In this embodiment, the split first tensor includes the at least two first sub-tensors. For example, as shown in FIG. 5, tensor concat aggregation needs to be performed on data slices (2 parts) obtained through splitting along the left-hand matrix and data slices (3 parts) obtained through splitting split along the right-hand matrix on a 0-axis and a 1-axis when tensors tensor are output, to obtain 6 split first sub-tensors. The 6 first sub-tensors are concatenated to form a first tensor 503. In this way, the concat splitting manner of the Matmul operator is implemented in the foregoing manner.

### 2. The tensor reduction reduce splitting.

In this embodiment, the splitting of the first tensor through the reduce splitting may be specifically implemented in the following manner.

### (1) Split the first tensor along an axis of the first tensor;

In this embodiment, as shown in FIG. 6, a first tensor 601 is split along an axis of the first tensor. For example, the first tensor is split along a K-axis, and a computation result of each slice is merely a partial result.

### (2) Perform tensor reduction aggregation on the split first tensor to obtain a split first tensor.

In this embodiment, the split first tensor includes the at least two first sub-tensors. As shown in FIG. 6, reduce aggregation is performed on two first tensors 601 split along the K-axis, to implement the reduce splitting manner of a Matmul operator. An obtained split tensor 602 includes the at least two first sub-tensors.

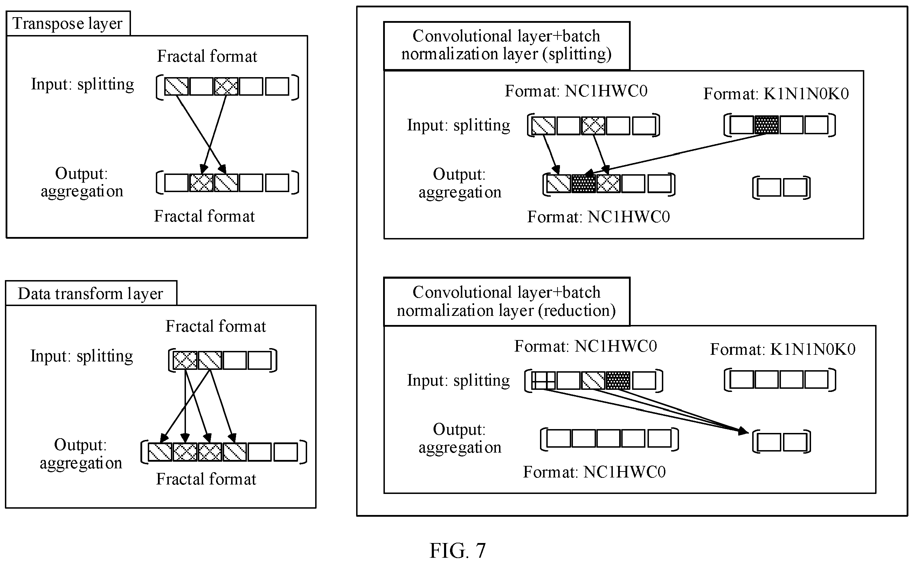

In this embodiment, for an unknown operator, there may be a complex mapping relationship between a splittable axis of an input tensor of the operator and an aggregation axis of an output tensor of the operator. In an embodiment of this application, tensors of operators are classified into two types: concat and reduce, and operator information carries a splitting aggregation mapping relationship between input and output of a corresponding operator. Refer to FIG. 7. FIG. 7 is a diagram of a mapping relationship obtained after operator splitting. As shown in FIG. 7, for concat splitting, an axis of an input tensor is split, and a computation result may be restored through a corresponding axis of an output tensor through concat aggregation. For reduce splitting, an axis of an input tensor is split, and a computation result may be restored through a corresponding axis of an output tensor through reduce aggregation. A reduce function satisfies f(a, b) = f(f(a), f(b)).

It should be noted that, for splitting of a tensor, both the concat splitting manner and the reduce splitting manner may be used. During a specific work, the following method is required to determine a most appropriate splitting manner. Specifically, the following steps are included.

### 1. Obtain all splitting manners of the first tensor.

In this embodiment, the first tensor may include a plurality of operators. For example, as shown in FIG. 4, the first tensor includes three operators. Different splitting manners may be respectively used for splitting all operators. Therefore, all the splitting manners of the first tensor include all permutations and combinations in which the different splitting manners are respectively used for the operators.

### 2. Obtain all split aggregation streams of the first tensor in a depth direction of a computation graph based on a mapping relationship.

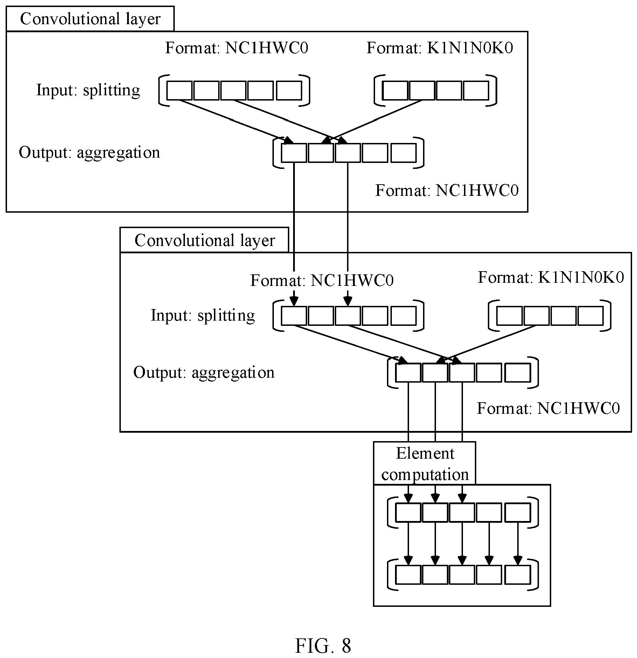

In this embodiment, the mapping relationship is a relationship between slices of the split first tensor, and each different splitting manner corresponds to one split aggregation stream. For example, FIG. 8 shows a split aggregation stream in a depth direction of a computation graph, and records a mapping relationship among an operator A 801, an operator B 802, and an operator C 803 of the split first tensor. As shown in FIG. 8, a first slice and a third slice that are input by the operator A 801 have a mapping relationship with a first slice and a third slice that are output by the operator A 801, and the first slice and the third slice that are output by the operator A 801 further have a mapping relationship with a first slice and a third slice of the operator B 802. In this case, split aggregation streams of the slices in the depth direction extend a distance of one operator through the mapping relationships.

### 3. Determine a splitting manner corresponding to a split aggregation stream with a longest transmission distance of the mapping relationship as a target splitting manner.

n this embodiment, as shown in FIG. 8, the split aggregation stream corresponding to each splitting manner has a different transmission distance in the depth direction of the computation graph, and the splitting manner corresponding to the aggregation stream with the longest transmission distance is determined as the target splitting manner. A splitting method corresponding to the splitting manner can enable an operator of the first tensor to be transmitted farther in the depth direction after splitting, to minimize a processing volume of intermediate data and maximize cache & buffer benefit.

### 4. Split the first tensor into at least two first sub-tensors in the target splitting manner.

In this embodiment, the first tensor is split into the at least two first sub-tensors based on the target splitting manner determined in the foregoing manner, so that the first tensor is split, and operators between the obtained sub-tensors are transmitted farther in the depth direction after splitting.

n this embodiment, the first tensor is split in two manners: the concat splitting and the reduce splitting, so that more diversified splitting manners are provided for a multi-dimensional vector. Further, an optimized splitting manner of the first tensor is determined through a transmission distance of the computation graph of the first tensor in the depth direction. On this basis, after the splitting manner is determined, a splitting quantity needs to be further determined. In other words, a quantity of the first sub-tensors that the first tensor is split into needs to be determined based on the determined splitting manner. For convenience of understanding, this is described in detail below.

It should be noted that, the splitting quantity affects performance in the following aspects.

When there are many times of splitting, each computation data volume is small, making it easier to store in the cache & buffer, thereby improving a data multiplexing.

When there are many times of splitting, a large quantity of working tasks task are generated in a computation process, generating a task launch cost (task launch cost).

When there are many times of splitting, more data is easier to be transferred for some operators. For example, if the conv2d operator is split based on fmap, weight data may be transferred a plurality of times.

Cache & buffer usage of splitting is related to a plurality of factors, such as a network structure (which affects a computation data volume in the lifecycle) and a quantity of operator parameters.

Therefore, a small splitting quantity affects data reuse of cache & buffer, but a larger splitting quantity is not necessarily better. This is a complex optimization problem. Because determining of the splitting quantity is complex, and cannot be resolved in a manual modeling manner, the splitting quantity may be determined in a machine learning manner. Specifically, the following steps are included.

### 1. Obtain training tensors.

In this embodiment, the training tensors and the first tensor are different tensors. Optionally, the training tensors are some common types of tensors that need to be processed, so that a trained model can adapt to a work requirement.

### 2. Determine a plurality of different computation policies based on the training tensors.

In this embodiment, the computation policy includes a splitting quantity of the training tensor. Specifically, each operator in the first tensor may be split into different quantities of parts based on the splitting manner determined in the foregoing steps, to be used as the different computation policies.

### 3. Generate a policy model through training based on the different computation policies.

In this embodiment, the policy model includes feedback time of a same training tensor corresponding to a case in which the different computation policies are executed. Therefore, feedback time corresponding to tensors of different splitting quantities can be predicted through the policy model obtained through the training, to determine a splitting quantity most appropriate to each tensor.

In this embodiment, an optimal splitting quantity of the first tensor is determined through a machine learning method. It should be noted that the foregoing machine learning method may be implemented in different manners, and may include as follows: 1. An evolutionary algorithm. 2. A reinforcement learning algorithm. 3. A reinforcement learning optimization. 4 An algorithm combining the evolutionary algorithm with reinforcement learning. For convenience of understanding, the four different implementations are described in detail as follows.

### 1. The evolutionary algorithm.

In this embodiment, an implementation of the evolutionary algorithm specifically includes the following steps.

### (1) Encode the different computation policies as gene sequences.

In this embodiment, the different computation policies correspond to different splitting quantities, and the different computation policies are encoded as the gene sequences, so that the training tensors become input data of the evolutionary algorithm.

### (2) Perform iterative verification on a gene sequence of each individual by using each computation policy as an individual.

In this embodiment, each computation policy is used as an individual, and is sampled as on-board data. A new individual (a computation policy) generated in each iteration is for on-board verification or is input into a simulator for verification, and a direction of population evolution is adjusted based on a feedback result to eventually converge an optimal solution through continuous iterations

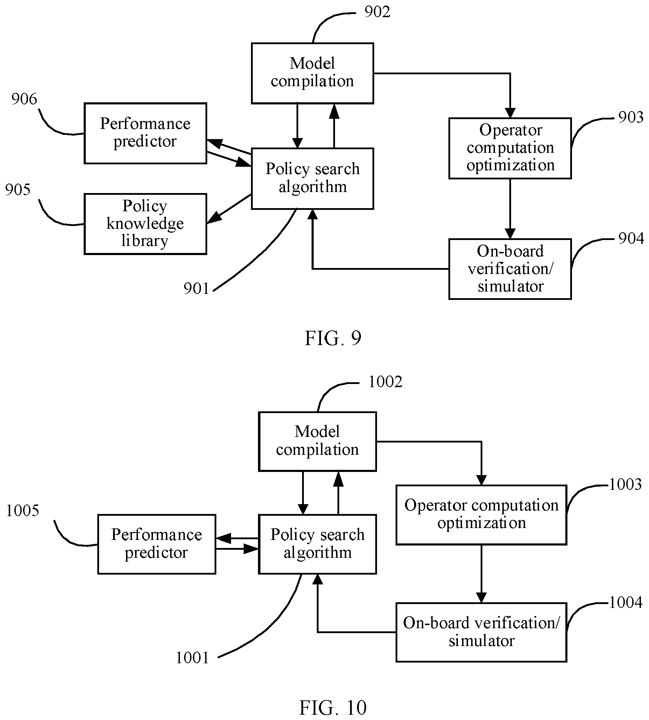

Optionally, FIG. 9 is a diagram of an architecture of an evolutionary algorithm. As shown in FIG. 9, the architecture includes a policy search algorithm 901, model compilation 902, operator computation optimization 903, and on-board verification/a simulator 904. In an iterative verification process, individuals of each iteration are obtained through the model compilation 902, and then the individuals are fine-tuned through the operator computation optimization 903, to implement individual mutation. A specific fine-tuning manner may include: adjusting splitting quantities of some operators in the first tensor, then inputting mutated individuals into the on-board verification/the simulator 904, performing verification on feedback time of the individuals, and feeding back a verification result to the policy search algorithm 901, so that the policy search algorithm knows a feedback time situation of the individuals in the current iteration.

### (3) Obtain a converged optimal solution in iteration results as a computation policy in a first policy model.

In this embodiment, the optimal solution obtained through the evolutionary algorithm is the most ideal computation policy, to generate the first policy model, where the first policy model is a policy model obtained through the evolutionary algorithm.

Optionally, as shown in FIG. 9, the policy search algorithm 901 is further connected to a policy knowledge library 905 and a performance predictor 906. For policy models obtained through the evolutionary algorithm each time, the policy search algorithm 901 may input the models into the policy knowledge library 905, so that in a subsequent working process, whenever a new tensor is input, a corresponding computation policy can be directly queried from the policy knowledge library 905, to determine a splitting quantity of a current vector. This does not require re-execution of the evolutionary algorithm, and shortens time for determining a splitting quantity of each tensor data, thereby improving computation efficiency.

In addition, the performance predictor 906 may predict feedback time based on a preset method, replace actual on-board verification through prediction of the performance predictor, and feed back performance data through a prediction method, to improve the computation efficiency.

### 2. Reinforcement learning algorithm.

In this embodiment, an implementation of the reinforcement learning algorithm specifically includes the following steps.

### (1) Use the different computation policies as a training set.

In this embodiment, a manner of generating a computation policy is the same as the foregoing manner. The different computation policies correspond to different splitting quantities.

### (2) The training set is trained as a target policy model through reinforcement learning.

In this embodiment, the reinforcement learning obtains the target policy model based on the training set.

### 3. A manner of reinforcement learning optimization.

In this embodiment, a reinforcement learning optimization algorithm uses, in each of a plurality of rounds of iterations, a target training tensor as fixed input that is input into the target policy model, where the target training tensor and the first tensor are different tensors.

Subsequently, the target policy model is optimized based on results output by the target policy model in the plurality of rounds of iterations.

Optionally, FIG. 10 is a diagram of an architecture of reinforcement learning optimization. As shown in FIG. 10, the architecture includes a policy search algorithm 1001 of reinforcement learning, model compilation 1002, operator computation optimization 1003, and on-board verification/a simulator 1004. The policy search algorithm 1001 trains the training set. An obtained policy model is compiled by the model compilation 1002 and then sent to the operator computation optimization 1003 to adjust a splitting quantity. Then, the on-board verification/the simulator 1004 performs on-board verification on data, to understand a feedback result of the current policy model. Finally, the optimized target policy model is obtained.

Optionally, the architecture further includes a performance predictor 1005, which may predict feedback time of a computation policy, to determine the computation policy more quickly.

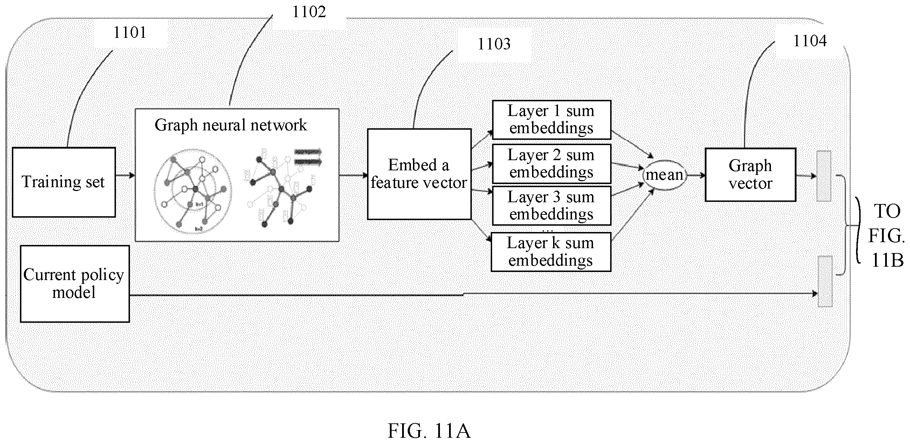

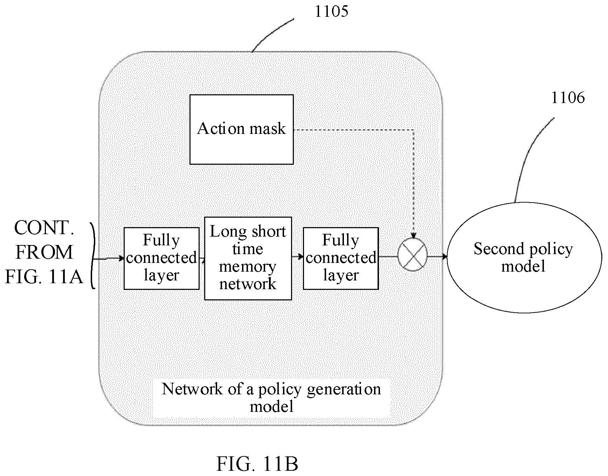

Optionally, the policy search algorithm 1001 of the reinforcement learning may be a hybrid neural network model that combines time sequence units such as a GraphSage graph neural network and a long short time memory (long short time memory, LSTM) network. A network policy network of a policy generation model may generate a splitting quantity of each node in a computation graph in sequence. Refer to FIG. 11A and FIG. 11B. FIG. 11A and FIG. 11B are a principle diagram of a reinforcement learning network. As shown in FIG. 11A and FIG. 11B, a training set 1101 is input into a GraphSage graph neural network 1102. The GraphSage graph neural network 1102 performs an Embedding operation 1103 of embedding a feature vector on the training set 1101, to obtain a graph vector 1104 of the training set 1101. Then, the graph vector 1104 is input into a network policy network of a policy generation model. A policy network 1105 processes the graph vector 1104 through a fully connected layer (fully connected layer, FC), an LSTM, and an FC layer in sequence. Finally, a second policy model 1106 is obtained.

It should be noted that, the policy network shown in FIG. 11A and FIG. 11B is merely an example. In a specific working process, a network structure of the policy generation model, namely, the policy network, may not be limited to an FC LSTM structure, and may use any appropriate depth generation model, for example, a transformer network. This is not limited in this embodiment of this application.

In this embodiment, through a reinforcement learning method, a policy model can be quickly obtained based on a training set, so that a long process of an evolutionary algorithm is not required, thereby improving computation efficiency.

It should be noted that, in the specific working process, if the policy model is obtained in a manner of the evolutionary algorithm, a model with higher accuracy can be obtained, but a speed is slower. Relatively, if the policy model is obtained in the manner of the reinforcement learning, because a plurality of rounds of iterations of the evolutionary algorithm are not required, the policy model can be obtained more quickly, but accuracy of the model is relatively low.

Further, because the evolutionary algorithm is sensitive to initial point selection, to obtain a converged optimal solution in a quicker and better manner, the foregoing two manners can be combined. For example, the policy generation model trained through reinforcement learning may be used to generate an initial population. Then, the evolutionary algorithm performs decrossover and mutation for optimization based on the population. This can improve search efficiency, and ensure a performance lower limit of the optimal solution. In this way, lowest performance of the policy model can reach performance of the policy model required by the reinforcement learning algorithm. For convenience of understanding, the algorithm combining the evolutionary algorithm with the reinforcement learning is described in detail below.

### 4. The algorithm combining the evolutionary algorithm with the reinforcement learning.

In this embodiment, an implementation of the algorithm combining the evolutionary algorithm with the reinforcement learning specifically includes the following steps.

### (1) Encode the computation policy in the optimized target policy model as the gene sequence.

In this embodiment, a second policy model is a policy model obtained through reinforcement learning optimization. The second policy model obtained through a reinforcement learning algorithm is used as an initial gene sequence of the evolutionary algorithm, so that an initial point of the evolutionary algorithm has already been an ideal policy model. This improves a performance lower limit of the evolutionary algorithm. In other words, performance of a first policy model generated by the evolutionary algorithm in a subsequent working process is not lower than performance of the second policy model.

### (2) Perform iterative verification on a gene sequence of each individual by using each computation policy in the second policy model as an individual.

In this embodiment, an iteration method of the evolutionary algorithm is the same as an iteration method of the foregoing evolutionary algorithm. A difference lies in that an initial sample of the iteration method is the second policy model computed by the reinforcement algorithm. Therefore, initial point selection should be better, so that the evolutionary algorithm can obtain an optimal solution in a quicker and better manner, and computation efficiency is greatly improved.

### (3) Obtain a converged optimal solution in iteration results as a computation policy in a first policy model.

In this embodiment, compared with a solution in which only the evolutionary algorithm is used and a solution in which only the reinforcement learning algorithm is used, the solution combines the two solutions, so that the initial point and an initial sampling point of the evolutionary algorithm is better, thereby improving computation efficiency, and ensuring the performance lower limit of the evolutionary algorithm.

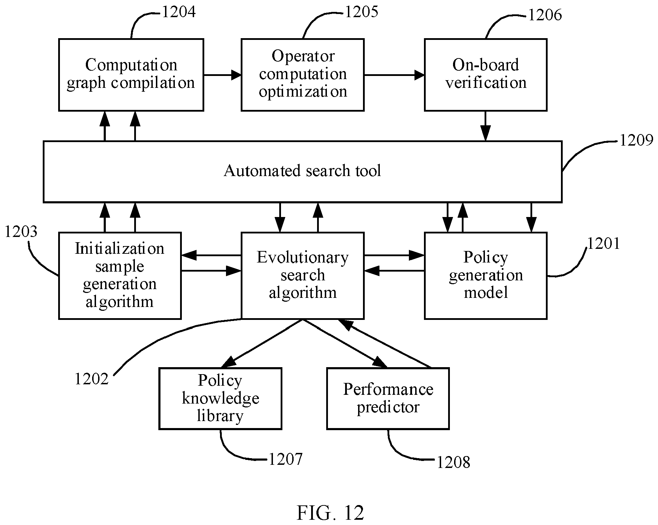

Further, refer to FIG. 12. FIG. 12 is a diagram of an architecture of an algorithm combining an evolutionary algorithm and reinforcement learning. As shown in FIG. 12, the architecture includes a policy generation model 1201, an evolutionary search algorithm 1202, an initialization sample generation algorithm 1203, a computation graph compilation 1204, operator computation optimization 1205, on-board verification 1206, an automated search tool 1209, a policy knowledge library 1207, and a performance predictor 1208.

In a specific working process, the policy generation model 1201 generates a second policy model through a reinforcement learning algorithm, and sends the second policy model to the evolutionary search algorithm 1202 to execute a computation procedure of the evolutionary algorithm. After the evolutionary search algorithm 1202 sends the second policy model to the initialization sample generation algorithm 1203 for initialization, the computation graph compilation 1204 performs graph compilation. Then, operator optimization and on-board verification are respectively performed by the operator computation optimization 1205 and the on-board verification 1206, to implement iteration steps of the evolutionary algorithm. In the foregoing working process, the automated search tool 1209 is responsible for data transmission.

In addition, as shown in FIG. 12, the evolutionary search algorithm 1202 is further connected to the policy knowledge library 1207 and the performance predictor 1208. For policy models obtained through the evolutionary algorithm each time, the evolutionary search algorithm 1202 may input the models into the policy knowledge library 1207, so that in a subsequent working process, whenever a new tensor is input, a corresponding computation policy can be directly queried from the policy knowledge library 1207, to determine a splitting quantity of a current vector. This does not require re-execution of the evolutionary algorithm, and shortens time for determining a splitting quantity of each tensor data, thereby improving computation efficiency. The performance predictor 1208 replaces actual on-board verification through prediction, and feeds back performance data through a prediction method, to improve the computation efficiency.

In this embodiment, in the foregoing manner, the splitting manner and the splitting quantity of the first tensor are determined, to implement a splitting operation of the first tensor, where the first tensor is split into the at least two first sub-tensors. In this case, subsequent steps are further performed.

302: Determine a target computation order of the at least two first sub-tensors.

In this embodiment, the target computation order is a processing order of the at least two first sub-tensors. For example, as shown in FIG. 4, the first tensor includes three operators. A splitting manner and a splitting quantity of each operator are determined in the foregoing manner. The first operator 401 is split into two parts. The second operator 402 is split into four parts. The third operator 403 is split into four parts. For a computation order of the split operators (namely, the sub-tensors), there may be two different methods: 1. Depth first. 2. Breadth first. Descriptions are provided as follows respectively.

### 1. The depth first.

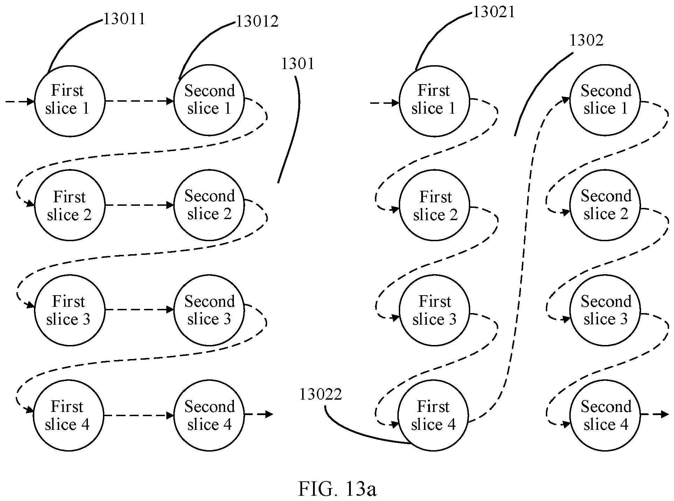

Refer to FIG. 13a. FIG. 13a is a schematic diagram of different computation orders. As shown in 1301 in FIG. 13a, a computation order of the depth first is as follows. After a first slice 13011 (sub-tensor) of a first operator is computed, a first slice 13012 of a next operator is computed. After first slices of all operators are executed, second splitting of all the operators is executed in sequence until all slices of all the operators are executed.

### 2. The breadth first.

Refer to FIG. 13a. FIG. 13a is a schematic diagram of different computation orders. As shown in 1302 in FIG. 13a, a computation order of the breadth first is as follows. A first slice 13021 to a last slice 13022 of a first operator are computed in sequence, and then a first slice to a last slice of a second operator are executed, until all slices of all operators are executed.

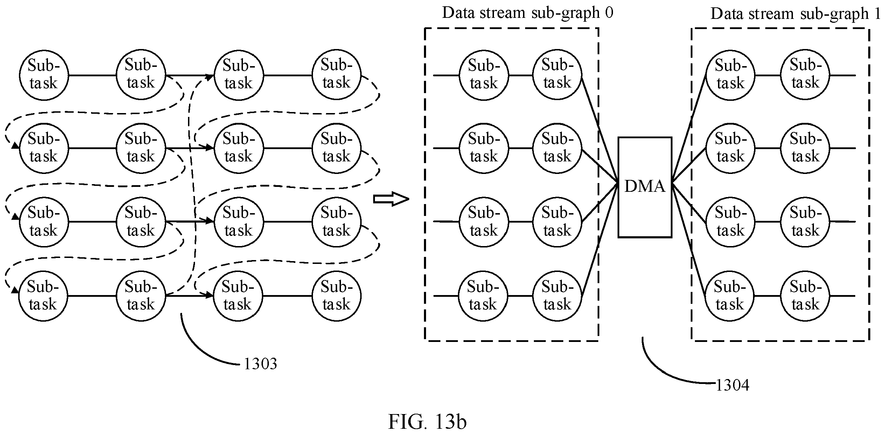

Optionally, on a chip system that supports concurrent scheduling and execution of a copied sub-graph, the foregoing computation order also indirectly defines a sub-graph boundary of a multi-thread concurrent pipeline sub-graph. Refer to FIG. 13b. FIG. 13b is a diagram of a correspondence between breadth first and a pipeline sub-graph boundary. As shown in FIG. 13b, a node 1303 of the breadth first may be considered as a boundary node of a pipeline sub-graph 1304.

In the foregoing two different computation orders, the order of the depth first can better reuse cached/buffered data, and obtain better memory benefit. However, the order of the depth first involves switching between operators, which causes more parameter loading (for example, weight and bias of conv2d). As a result, data in a cache is swapped out, or data in a buffer cannot be kept and is dropped (drop) to external storage. In this case, the order of the breadth first is better. Therefore, under a premise of meeting computational dependency, determining of a computation order is also a complex optimization problem, and cannot be resolved by manual modeling.

For this, the foregoing problems may also be resolved in a manner of machine learning. That is: 1. The manner of the evolutionary algorithm. 2. The reinforcement learning algorithm. 3. The reinforcement learning optimization. 4. The algorithm combining the evolutionary algorithm with the reinforcement learning. Descriptions are provided as follows respectively.

### 1. The evolutionary algorithm.

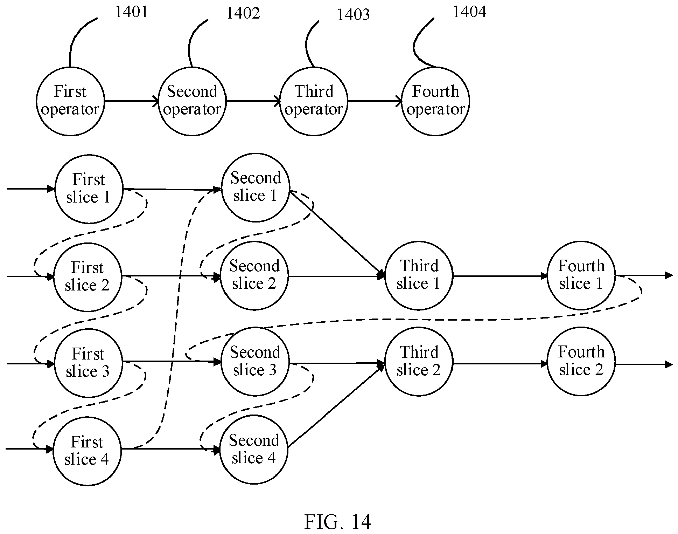

In a working manner of the evolutionary algorithm, when a gene sequence is encoded, different computation orders are also used as encoding factors. Specifically, the gene sequence is organized in a manner of vector<pair<split_ num, order>>. A vector length represents a quantity of nodes existing in a topology order, split num represents a splitting quantity of a node, and order represents a computation order, where the depth first is denoted as D, and the breadth first is denoted as B. FIG. 14 shows a memory encoding form of a computation order. As shown in FIG. 14, gene code of a policy is like [4, B, 4, D, 2, D, 2, B]. A meaning expressed by the gene code is that a tensor shown in FIG. 14 includes four operators: a first operator 1401, a second operator 1402, a third operator 1403, and a fourth operator 1404, where the first operator 1401 is split into four slices op1_1 to op1_4, the second operator 1402 is split into four slices op2_1 to op2_4, the third operator 1403 is split into two slices op3_1 to op3_2, and the fourth operator 1404 is split into two slices op4_1 to op4_2. The Slices op1_1 to op1_4 use a computation order of the breadth first. The Slices op2_1 to op2_4 use the computation order of the breadth first. The Slices op3_1 to op3_2 use an order of the depth first. The Slices op4_1 to op4_2 use the order of the depth first.

In this way, the gene code can be used as an individual of a round of iteration. The evolutionary algorithm performs optimization of the policy, and a policy model that can determine an optimal computation order is finally obtained. For subsequent steps of the evolutionary algorithm, refer to the foregoing descriptions, and details are not described herein again.

For the latter three methods, that is: 2. The reinforcement learning algorithm. 3. The reinforcement learning optimization. 4. The algorithm combining the evolutionary algorithm with the reinforcement learning, refer to the foregoing descriptions, provided that different computation orders are also input into a model as a training volume when a training set is input. Details are not described herein again.

After the policy model is obtained in the foregoing manner, when a new tensor is input, the tensor is input into the policy model. Then, a target computation order for the tensor may be obtained from the policy model.

303: Process the at least two first sub-tensors based on the target computation order.

In this embodiment, in the foregoing method, the splitting manner and the splitting quantity of the first tensor are respectively determined, so that the first tensor is split into the at least two first sub-tensors, and the target computation order is further determined. Therefore, the first tensor can be processed by processing the at least two split first sub-tensors through the target computation order.

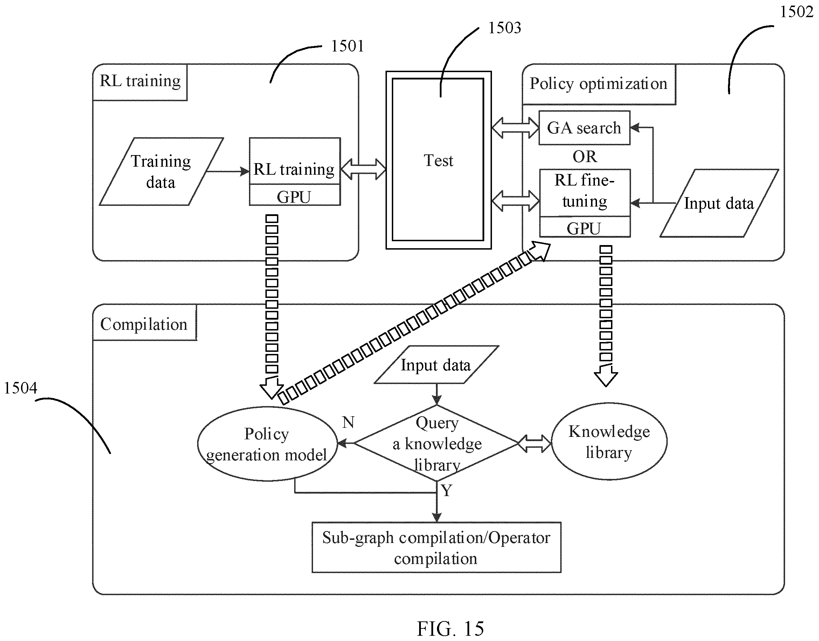

Optionally, FIG. 15 is an entire flowchart according to an embodiment of this application. As shown in FIG. 15, an architecture of a procedure includes a reinforcement learning RL training module 1501, a policy optimization module 1502, a test module 1503, and a compilation module 1504 configured to perform computation graph compilation. In a specific working process, the RL training module 1501 obtains a policy model through training based on the foregoing reinforcement learning method, and sends the policy model to the compilation module 1504. The policy optimization module 1502 obtains an optimized policy model through evolutionary algorithm GA search, reinforcement learning optimization, or a combination thereof, and sends the optimized policy model to the compilation module 1504. The compilation module 1504 stores the optimized policy model in a knowledge library.

It should be noted that, when the policy optimization module 1502 performs reinforcement learning optimization, a used initial policy model is obtained by the compilation module 1504 from the RL training module 1501, and is then sent to the policy optimization module 1502.

In a working process of the RL training module 1501 and the policy optimization module 1502, the obtained policy model needs to be measured by the test module 1503 before being sent to the compilation module 1504. The test module 1503 enables the obtained policy model to exchange with a real environment in an on-board verification manner, so that performance of the policy model can be evaluated. Optionally, the test module 1503 may further evaluate the performance of the policy model through simulation of a simulator or prediction of a performance predictor, to improving working efficiency of the test module 1503.

As shown in FIG. 15, the compilation module 1504 is configured to perform computation graph compilation. When a new first tensor is input, the compilation module 1504 first queries the knowledge library. If an optimal policy model that can be configured to process a current first tensor is found in the knowledge library, sub-graph/operator compilation is performed on the first tensor through the optimal policy model, so that optimal processing can be performed on the first tensor. If the compilation module 1504 does not find, in the knowledge library, the optimal policy model that can be configured to process the current first tensor, the first tensor is processed through the policy model generated by the RL training module 1501, to ensure that the first tensor can be processed.

The data processing method provided in an embodiment of this application includes: splitting a first tensor into at least two first sub-tensors, where first tensor is a to-be-processed multi-dimensional tensor; determining a target computation order of the at least two first sub-tensors, where the target computation order is a processing order of the at least two first sub-tensors; and processing the at least two first sub-tensors based on the target computation order. By determining a splitting manner, a splitting quantity, and a computation order of a control operator, a data throughput of a neural network computation task can be effectively reduced, so that cache & buffer are used more efficiently, to improve execution efficiency of data access and pipeline computation.

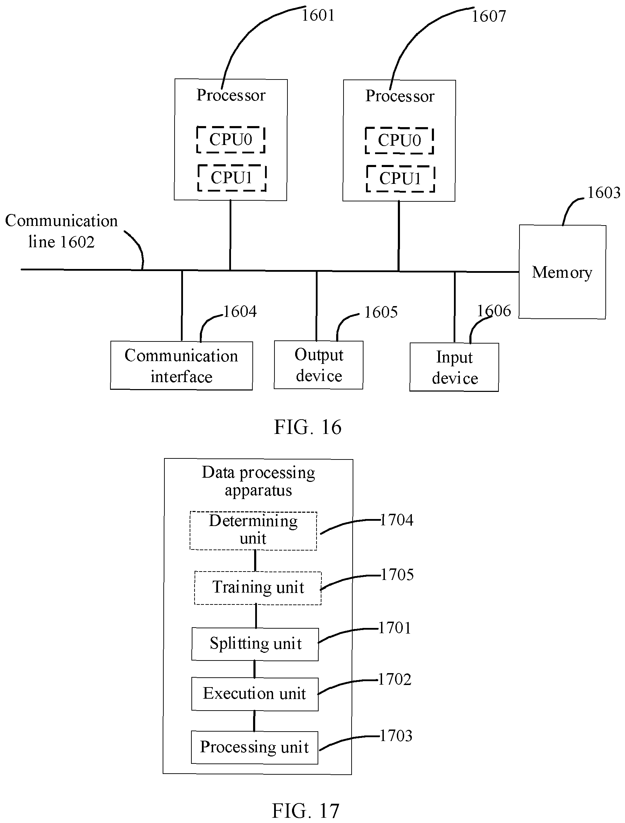

Further, an embodiment of this application provides a computer device. As shown in FIG. 16, the device includes at least one processor 1601, a communication line 1602, a memory 1603, and at least one communication interface 1604.

The processor 1601 may be a general-purpose central processing unit (central processing unit, CPU), a microprocessor, an application-specific integrated circuit (application-specific integrated circuit, ASIC), or one or more integrated circuits configured to control program execution of solutions in this application.

The communication line 1602 may include a channel, to transmit information between the foregoing components.

The communication interface 1604 uses any apparatus of a transceiver type to communicate with another device or a communication network such as an Ethernet, radio access network (radio access network, RAN), a wireless local area network (wireless local area network, WLAN), or the like.

The memory 1603 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including a compressed optical disc, a laser disc, an optical disc, a digital versatile optical disc, a Blu-ray disc, or the like), a magnetic disk storage medium or another magnetic storage device, or any another medium that can be used to carry or store expected program code in the form of instructions or a data structure and that can be accessed by a computer, but not limited thereto. The memory may exist independently and is connected to the processor through the communication line 1602. Optionally, the memory may be integrated with the processor.

The memory 1603 is configured to store computer executable instructions for performing the solutions of this application, and is controlled and executed by the processor 1601. The processor 1601 is configured to execute the computer executable instructions stored in the memory 1603 to implement the method provided in the following embodiments of this application.

Optionally, the computer executable instructions in this application may also be referred to as application code. This is not specifically limited in this application.

During specific implementation, in an embodiment, the processor 1601 may include one or more CPUs, for example, a CPU0 and a CPU1 in FIG. 16.

During specific implementation, in an embodiment, an electronic device may include one or more processors, for example, a processor 1601 and a processor 1607 in FIG. 16. Each of the processors may be a single-core processor, or may be a multi-core processor. The processor herein may be one or more devices, circuits, and/or processing cores configured to process data (for example, computer program instructions).

During specific implementation, in an embodiment, the electronic device may further include an output device 1605 and an input device 1606. The output device 1605 communicates with the processor 1601, and may display information in a plurality of manners. For example, the output device 1605 may be a liquid crystal display (liquid crystal display, LCD), a light emitting diode (light emitting diode, LED) display device, a cathode ray tube (cathode ray tube, CRT) display device, a projector (projector), or the like. The input device 1606 communicates with the processor 1601, and may receive user input in a plurality of manners. For example, the input device 1606 may be a mouse, a keyboard, a touchscreen device, a sensor device, or the like.

The electronic device may be a general-purpose device or a dedicated device. During specific implementation, the electronic device may be a device configured to run a circuit noise reduction method in embodiments of this application. A type of the electronic device is not limited in this application.

In embodiments of this application, functional units of the electronic device may be divided based on the foregoing method example. For example, each functional unit may be divided according to each function, or two or more functions may be integrated into one processing unit. The integrated unit may be implemented in a form of hardware, or may be implemented in a form of a software functional unit. It should be noted that, in embodiments of this application, the unit division is an example, and is merely logical function division, and there may be other division manners during actual implementation.

For example, in a case that functional units are obtained through division in an integrated manner, FIG. 17 is a schematic diagram of a structure of a data processing apparatus according to an embodiment of this application.

As shown in FIG. 17, the data processing apparatus provided in this embodiment of this application includes:
a splitting unit 1701, configured to split a first tensor into at least two first sub-tensors, where the first tensor is a to-be-processed multi-dimensional tensor;
an execution unit 1702, configured to determine a target computation order of the at least two first sub-tensors split by the splitting unit 1701, where the target computation order is a processing order of the at least two first sub-tensors; and
a processing unit 1703, configured to process the at least two first sub-tensors based on the target computation order determined by the execution unit 1702.

Optionally, the splitting unit 1701 is further configured to:
input the first tensor into a left-hand matrix;
split the first tensor into N parts along an axis of the left-hand matrix, where N is a positive integer greater than or equal to 2;
input the first tensor into a right-hand matrix;
split the first tensor into M parts along an axis of the right-hand matrix, where M is a positive integer greater than or equal to 2; and
perform tensor concatenation aggregation on the N parts of the split first tensor and the M parts of the split first tensor to obtain a split first tensor, where the split first tensor includes the at least two first sub-tensors.

Optionally, the splitting unit 1701 is further configured to:
split the first tensor along an axis of the first tensor; and
perform tensor reduction aggregation on the split first tensor to obtain a split first tensor, where the split first tensor includes the at least two first sub-tensors.

Optionally, the apparatus further includes a determining unit 1704, configured to:
obtain all splitting manners of the first tensor;
obtain all split aggregation streams of the first tensor in a depth direction of a computation graph based on a mapping relationship, where the mapping relationship is a relationship between slices of the split first tensor, and each different splitting manner corresponds to one split aggregation stream; and
determine a splitting manner corresponding to a split aggregation stream with a longest transmission distance of the mapping relationship as a target splitting manner.

The splitting unit 1701 is further configured to:
split the first tensor into the at least two first sub-tensors in the target splitting manner.

Optionally, the apparatus further includes a training unit 1705, configured to:
obtain training tensors, where the training tensors and the first tensor are different tensors;
determine a plurality of different computation policies based on the training tensors, where the computation policy includes a splitting quantity of the training tensor and a computation order; and
generate a target policy model through training based on the different computation policies, where the target policy model includes feedback time of a same training tensor corresponding to a case in which the different computation policies are executed.

Optionally, the training unit 1705 is further configured to:
use, in each of a plurality of rounds of iterations, a target training tensor as fixed input that is input into the target policy model, where the target training tensor and the first tensor are different tensors; and
optimize the target policy model based on results output by the target policy model in the plurality of rounds of iterations.

Optionally, the training unit 1705 is further configured to:
encode the different computation policies as gene sequences;
perform iterative verification on a gene sequence of each individual by using each computation policy as an individual; and
obtain a converged optimal solution in iteration results as a computation policy in the target policy model.

Optionally, the training unit 1705 is further configured to:
encode the computation policy in the optimized target policy model as the gene sequence.

Optionally, the training unit 1705 is further configured to:
input the target policy model into a simulator; and
obtain a feedback result output after the simulator performs data simulation on the target policy model, where the feedback result indicates performance of the target policy model; or
input the target policy model into a performance predictor; and
obtain a prediction result output by the performance predictor, where the prediction result is for predicting performance of the target policy model.

Optionally, the training unit 1705 is further configured to:
obtain the target policy model from a policy knowledge library; and
obtain a target computation policy based on the target policy model, where the target computation policy includes a splitting quantity of the first tensor and the target computation order.

In the foregoing embodiment, all or part of the software, hardware, firmware, or any combination thereof may be implemented. When the software is used for implementation, all or part of the implementation may be implemented in a form of a computer program product.

The computer program product includes one or more computer instructions. When the computer program instructions are loaded and executed on a computer, the procedures or the functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium stored by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state drive Solid State Disk (SSD)), or the like.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. Furthermore, the terms "include" and "have" and any variants thereof mean to cover the non-exclusive inclusions so that a process, method, system, product or device that includes a series of units is not necessarily limited to those units, but may include other units not explicitly listed or inherent to such processes, methods, products or devices. In embodiments of this application, "a plurality of' refers to two or more.

In embodiments of this application, the term "example" or "for example" or the like is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a relative concept in a specific manner.

In embodiments of this application, for convenience of understanding, a plurality of examples are used for description. However, these examples are merely some examples, and are not optimal implementations to implement this application.

The foregoing describes in detail the technical solutions provided in this application. The principle and implementations of this application are described in this specification by using specific examples. The descriptions of the foregoing embodiments are merely used for helping understand the method and core ideas of this application. In addition, a person of ordinary skill in the art may make modifications to the specific implementations and application scopes according to the ideas of this application. In conclusion, the content of the specification should not be construed as a limitation to this application.

## Claims

1. A data processing method, comprising:
splitting a first tensor into at least two first sub-tensors, wherein the first tensor is a to-be-processed multi-dimensional tensor;
determining a target computation order of the at least two first sub-tensors, wherein the target computation order is a processing order of the at least two first sub-tensors; and
processing the at least two first sub-tensors based on the target computation order.

2. The method according to claim 1, wherein the splitting a first tensor into at least two first sub-tensors comprises:
inputting the first tensor into a left-hand matrix;
splitting the first tensor into N parts along an axis of the left-hand matrix, wherein N is a positive integer greater than or equal to 2;
inputting the first tensor into a right-hand matrix;
splitting the first tensor into M parts along an axis of the right-hand matrix, wherein M is a positive integer greater than or equal to 2; and
performing tensor concatenation aggregation on the N parts of the split first tensor and the M parts of the split first tensor to obtain a split first tensor, wherein the split first tensor comprises the at least two first sub-tensors.

3. The method according to claim 1 or 2, wherein the splitting a first tensor into at least two first sub-tensors comprises:
splitting the first tensor along an axis of the first tensor; and
performing tensor reduction aggregation on the split first tensor to obtain a split first tensor, wherein the split first tensor comprises the at least two first sub-tensors.

4. The method according to any one of claims 1 to 3, wherein before the splitting a first tensor into at least two first sub-tensors, the method further comprises:
obtaining all splitting manners of the first tensor;
obtaining all split aggregation streams of the first tensor in a depth direction of a computation graph based on a mapping relationship, wherein the mapping relationship is a relationship between slices of the split first tensor, and each different splitting manner corresponds to one split aggregation stream; and
determining a splitting manner corresponding to a split aggregation stream with a longest transmission distance of the mapping relationship as a target splitting manner; and
the splitting a first tensor into at least two first sub-tensors comprises:
splitting the first tensor into the at least two first sub-tensors in the target splitting manner.

5. The method according to any one of claims 1 to 4, wherein before the splitting a first tensor into at least two first sub-tensors, the method further comprises:
obtaining training tensors, wherein the training tensors and the first tensor are different tensors;
determining a plurality of different computation policies based on the training tensors, wherein the computation policy comprises a splitting quantity of the training tensor and a computation order; and
generating a target policy model through training based on the different computation policies, wherein the target policy model comprises feedback time of a same training tensor corresponding to a case in which the different computation policies are executed.

6. The method according to claim 5, wherein after the generating a target policy model through training based on the different computation policies, the method further comprises:
using, in each of a plurality of rounds of iterations, a target training tensor as fixed input that is input into the target policy model, wherein the target training tensor and the first tensor are different tensors; and
optimizing the target policy model based on results output by the target policy model in the plurality of rounds of iterations.

7. The method according to claim 6, wherein the generating a target policy model through training based on the different computation policies comprises:
encoding the different computation policies as gene sequences;
performing iterative verification on a gene sequence of each individual by using each computation policy as an individual; and
obtaining a converged optimal solution in iteration results as a computation policy in the target policy model.

8. The method according to claim 7, wherein the encoding the different computation policies as gene sequences comprises:
encoding the computation policy in the optimized target policy model as the gene sequence.

9. The method according to any one of claims 5 to 8, wherein after the generating a target policy model through training based on the different computation policies, the method further comprises:
inputting the target policy model into a simulator; and
obtaining a feedback result output after the simulator performs data simulation on the target policy model, wherein the feedback result indicates performance of the target policy model; or
inputting the target policy model into a performance predictor; and
obtaining a prediction result output by the performance predictor, wherein the prediction result is for predicting performance of the target policy model.

10. The method according to any one of claims 5 to 9, wherein the method further comprises: adding the target policy model to a policy knowledge library; and the determining a target computation order of the at least two first sub-tensors comprises:
obtaining the target policy model from the policy knowledge library; and
obtaining a target computation policy based on the target policy model, wherein the target computation policy comprises a splitting quantity of the first tensor and the target computation order.

11. A data processing apparatus, comprising:
a splitting unit, configured to split a first tensor into at least two first sub-tensors, wherein the first tensor is a to-be-processed multi-dimensional tensor;
an execution unit, configured to determine a target computation order of the at least two first sub-tensors split by the splitting unit, wherein the target computation order is a processing order of the at least two first sub-tensors; and
a processing unit, configured to process the at least two first sub-tensors based on the target computation order determined by the execution unit.

12. A computer device, comprising a processor and a memory, wherein when running computer instructions stored in the memory, the processor performs the method according to any one of claims 1 to 10.

13. A computer-readable storage medium, comprising instructions, wherein when the instructions are run on a computer, the computer is enabled to perform the method according to any one of claims 1 to 10.
